# EUROPÄISCHE PATENTSCHRIFT

(11) **EP 0 540 769 B1**
(45) Veröffentlichungstag und Bekanntmachung des Hinweises auf die Patenterteilung: **25.09.1996**
(21) Anmeldenummer: 91118754.0
(22) Anmeldetag: 04.11.1991
(51) Int. Cl.: B65G 21/06

(54) **Bandfördervorrichtung mit zusammengesetztem Förderbandrahmen**
Belt conveyor device with compound frame
Dispositif de transporteur à courroie avec cadre composite

(43) Veröffentlichungstag der Anmeldung: 12.05.1993
(73) Patentinhaber: Geppert, Helmut, D-52382 Niederzier (DE)
(72) Erfinder: Geppert, Helmut, D-52382 Niederzier (DE)
(74) Vertreter: Aubele, Karl B.

(56) Entgegenhaltungen:
- FR-A- 2 132 111
- FR-A- 2 636 052

## Beschreibung

Die Erfindung betrifft Bandfördervorrichtungen mit im Abstand gegenüberliegenden, zueinander parallel verlaufenden Längsholmen, die mittels eines tragenden Zwischenstücks miteinander verbunden sind, wobei die Teile des Zwischenstücks, die unmittelbar an die Längsholme angrenzen, mit diesen unlösbar verbunden sind, wobei mindestens eine der beiden freien Oberflächen des Zwischenstücks als geschlossene Gleitebene für das Förderband oder als Auflage für ein Gleitstück dient und wobei das Zwischenstück im Bereich zwischen den Längsholmen über die ganze Länge in mindestens zwei Teile getrennt ist, die in diesem getrennten Bereich über Verbindungsmittel miteinander verbunden sind, wobei der getrennte Bereich im Querschnitt jeweils als ein einander zugeordnetes Rastprofil ausgebildet ist.

Eine Einrichtung der vorbeschriebenen Art ist bekannt geworden aus der französischen Patentanmeldung FR-A-2.636.052. Bei dieser Rasteinrichtung wird zwischen zwei Längsholmen von oben ein Verbindungstück eingeschoben und so fest angedrückt, daß sich Nasen des Verbindungsstückes mit den Längshomen verhaken. Da die Teile der Bandfördervorrichtungen jedoch relativ lang sind, muß gleichzeitig über eine große Länge eine relativ starke Kraft auf das Mittelstück aufgebracht werden, um das Mittelstück einrasten zu lassen. Das Aufbringen einer derartigen Kraft ist jedoch sehr umständlich und in der Praxis kaum möglich.

Der Erfindung liegt somit die Aufgabe zugrunde, Bandfördervorrichtungen der eingangs beschriebenen Art so weiterzubilden, daß Längsholmen und Zwischenstücke auf einfache Art miteinander verbunden werden können.

Erfindungsgemäß wird diese Aufgabe mit den Kennzeichnenden Merkmalen des Patentanspruchs gelöst. Die zugeordneten Rastprofile sind so profiliert, daß die zusammenzufügenden Teile, nachdem sie abgewinkelt ineinander gesteckt wurden, durch Kippen um den Anschlag ineinanderrasten.

Bei dieser Ausgestaltung können einander zugeordnete Rastprofile von Teilen durch einfaches Aufeinanderstecken verbunden werden. Dies bedeutet nicht nur eine Rationalisierung der Arbeitsschritte, sondern auch eine Arbeitserleichterung, da ein leichtes Zusammenfügen der Trennflächen durch den Hebeleffekt der zusammenzufügenden Teile erreicht wird.

Die Erfindung soll nun anhand der beigefügten Zeichnungen näher erläutert werden.

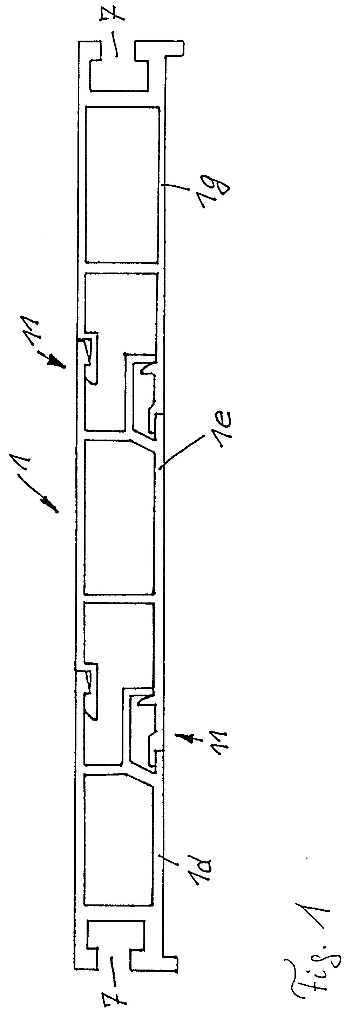

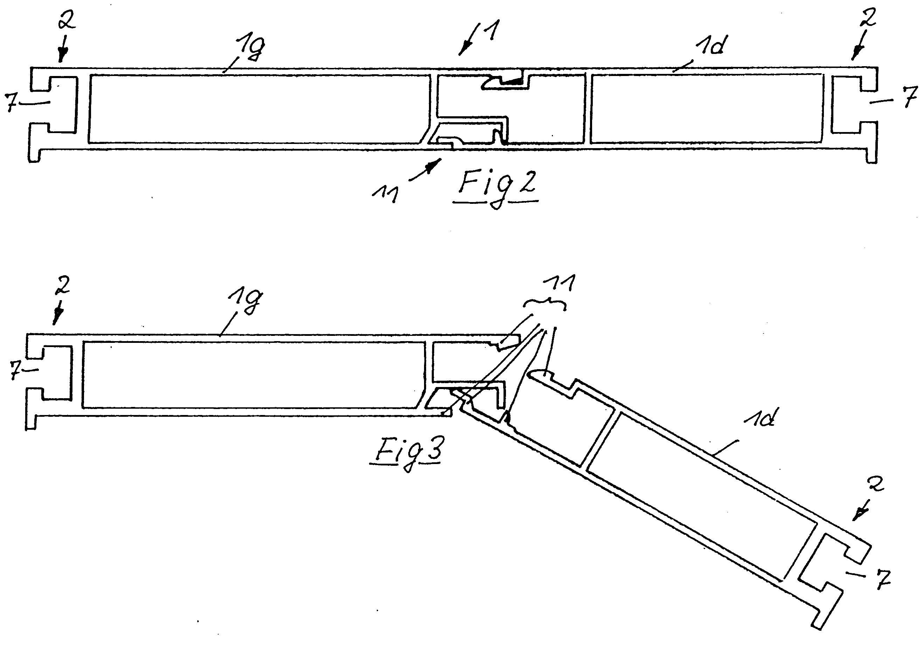

Es zeigen:
- Figur 1:: einen dreiteiligen Rahmen für Bandfördervorrichtungen in der Vorderansicht
- Figur 2: einen geschlossenen zweiteiligen Rahmen mit Rastprofil in der Vorderansicht
- Figur 3: einen angewinkelten zweiteiligen Rahmen mit Rastprofil in der Vorderansicht
Eine Ausbildung der Trennflächen 5 als im Querschnitt profiliertes Rastprofil zeigt Figur 1 sowie die Figuren 2 und 3. Die zugeordneten Rastprofile sind so profiliert, daß die zusammenzufügenden Teile 1d, 1e, 1g, nachdem sie angewinkelt ineinandergesteckt wurden (Figur 3,) durch Kippen (Figur 2), ineinanderrasten.

Rastprofile dieser Art sind an sich im Stand der Technik bekannt. Eine Verwendung solcher Rastprofile für die Herstellung von Bandfördervorrichtungen ist unbekannt.

Mit der beschriebenen Erfindung ist es somit möglich, Bandfördervorrichtungen in nahezu allen gewünschten Breiten herzustellen. Dazu lassen sich die beschriebenen Teile leicht als Halbzeug herstellen und durch einfaches Ablängen für beliebige Längen der Bandfördervorrichtung verwenden. Anfallender Verschnitt kann z.B. dadurch vermindert werden, daß zu kurze mittlere Teile 1e mit Hilfe der Verbindungsmittel bei z.B. einem dreiteiligen Rahmen eingebaut werden. Sie können dann in Längsrichtung bis zur gewünschten Länge einfach hintereinandergeschoben werden. Der Zusammenbau der wenigen Einzelteile kann in zeitsparender Weise erfolgen. Eine Möglichkeit, Teile oder Zwischenstücke ohne gesonderte Verbindungsmittel zu einem festen Rahmen zu verbinden, ist dadurch gegeben, daß die Trennflächen der Teile im Querschnitt als zugeordnete Rastprofile ausgeformt sind. Das Verbinden der Teile geschieht hierbei zunächst dadurch, daß die zugeordneten Trennflächen in Längsrichtung angewinkelt ineinandergesteckt werden, die dann bei einer darauffolgenden Kippbewegung fest ineinanderrasten. Hierbei entsteht eine Verbindung von besonders hoher Stabilität. Die Anforderung an die Montagegeschicklichkeit beim Zusammenbau ist besonders gering, da ein genaues Zusammenfügen der Trennflächen durch das Ineinandergreifen der Rastprofile vorgegeben ist.

## Patentansprüche

1. Bandfördervorrichtungen mit im Abstand gegenüberliegenden, zueinander parallel verlaufenden Längsholmen (2), die mittels eines tragenden Zwischenstücks (1) miteinander verbunden sind, wobei die Teile des Zwischenstücks, die unmittelbar an die Längsholme angrenzen, mit diesen unlösbar verbunden sind, wobei mindestens eine der beiden freien Oberflächen des Zwischenstücks (1) als geschlossene Gleitebene für das Förderband oder als Auflage für ein Gleitstück dient, und wobei das Zwischenstück (1) im Bereich zwischen den Längsholmen (2) über die ganze Länge in mindestens zwei Teile (1g, 1d, 1e) getrennt ist, die in diesem getrennten Bereich über Verbindungsmittel miteinander verbunden sind, wobei der getrennte Bereich im Querschnitt jeweils als ein einander zugeordnetes Rastprofil (11) ausgebildet ist, dadurch gekennzeichnet daß die zugeordneten Rastprofile aus einem der einen freien oberfläche benachbarten Anschlag und diesem gegenüberliegenden ineinandergreifenden der anderen freien oberfläche benachbarten Rasteinerichtungen bestehen, so daß die zusammenzufügenden Teile (1g, 1d, 1e), nach dem sie abgewinkelt ineinandergesteckt wurden, durch Kippen nur den Auschlag ineinanderrasten.

## Claims

1. Belt conveyor systems with spaced apart and mutually opposite parallel longitudinal members (2) which are connected to one another by a supporting intermediate member (1), the parts of the intermediate member which are immediately adjacent the longitudinal members being inseparably connected to these latter, whereby at least one of the two free surfaces of the intermediate member (1) serves as a closed sliding plane for the conveyor belt or as a support for a sliding member, the intermediate member (1) being, in the region between the longitudinal members (2) and over the entire length, separated into at least two parts (1g, 1d, 1e) which, in this area of separation, are connected to each other by connecting means, the area of separation being in cross-section constructed as an associated catch profile (11), characterised in that the associated catch profiles consist of an abutment adjacent a free surface and, opposite this and inter-engaging with it, catch means adjacent the other free surface, so that once they have been angled-over and fitted into one another by being tilted, they inter-engage with each other and with the abutment.

## Revendications

1. Dispositifs convoyeurs à courroie comportant des longerons (2) parallèles et espacés l'un en face de l'autre qui sont reliés à l'aide d'une pièce intermédiaire porteuse (1), étant précisé que les parties de la pièce intermédiaire qui sont directement voisines des longerons sont reliées à ceux-ci de façon non détachable, que l'une au moins des deux surfaces libres de la pièce intermédiaire (1) sert de plan de glissement fermé pour la courroie du convoyeur ou d'appui pour un coulisseau, et que la pièce intermédiaire (1) prévue dans la zone entre les longerons (2) est séparée sur toute sa longueur en au moins deux parties (1g, 1d, 1e) qui sont reliées dans cette zone séparée par des moyens de liaison, la zone séparée étant conçue en section transversale avec un profil d'encliquetage mutuel (11), caractérisés en ce que les profils d'encliquetage associés comprennent une butée voisine de l'une des surfaces libres, et des dispositifs d'encliquetage venant en prise les uns dans les autres, opposés à la butée et voisins de l'autre surface libre, de sorte que les parties à assembler (1g, 1d, 1e) viennent s'encliqueter les unes dans les autres grâce à un basculement autour de la butée après avoir été emboîtées suivant un certain angle.
